# EUROPEAN PATENT APPLICATION

(11) **EP 2 131 121 A2**
(43) Date of publication of application: **09.12.2009**
(21) Application number: 08105695.4
(22) Date of filing: 29.10.2008
(51) Int. Cl.: F24J 2/24, F24J 2/46

(54) **Solar collector**

(30) Priority: 01.11.2007 US 996118 P
(71) Applicant: Acktar Ltd., 82000 Kiryat Gat (IL)
(72) Inventor: Katzir, Dina, Beer sheva 84770 (IL); Finkelstein, Zvi, Asseret 76858 (IL); Zarnitsy, Yuri, Ashdod 77452 (IL); Tartakovsky, Israel, Kiryat Gat 82218 (IL)
(74) Representative: Colens, Alain M.G.M.

(57) **Abstract**

Apparatus for collection of solar energy includes at least one heat-transfer collector device (2) comprising (i) a hollow core (4), adapted for passage of heat transfer fluid, and (ii) a preferably detachable laminar metallic cover (6) configured to wrap around the and be in close physical contact with at least part of an outer surface of the core (4), while the outer surface of the cover is adapted for exposure to solar radiation by the presence of a solar energy absorptive coating.

## Description

### FIELD OF THE INVENTION

The present invention relates to apparatus for collection of solar energy.

### BACKGROUND OF THE INVENTION

The generation of energy from solar radiation has been well-known for some years. In a relatively recent development, one or more solar energy collectors is mounted on a tower, and sunlight from a very large number (e.g. hundreds) of sun-tracking mirrors called heliostats is reflected onto the collector(s). Thus, energy is generated from, in effect, tens or even hundreds of suns, which reflect and concentrate the sun's energy onto the collector arrangement. Such solar power towers, and their equivalents (e.g. essentially horizontal configurations), must be relatively large to be economical.

The solar energy absorptive surface of solar energy collectors in the solar power towers (or their equivalents) will be subjected to high winds, rain or snow and also very high temperatures, and often to deterioration due to sand particles and organic pollutants. Once this surface has been damaged, the collector will have to be dismantled and replaced, which is expensive and time-consuming and will affect the overall economy of the process.

Accordingly, it is an object of the present invention, to provide a solar energy collection apparatus in which an absorptive surface module can be replaced without the necessity of dismantling the entire collection system. Other objects of the invention will appear from the description which follows.

### SUMMARY OF THE INVENTION

The present invention accordingly provides apparatus for collection of solar energy which includes at least one heat-transfer collector device comprising (i) a hollow core, adapted for passage of heat transfer fluid through the hollow(s) thereof, and (ii) a laminar metallic cover defining an inner and an outer surface, the cover being configured to wrap around the core, whereby the inner surface of the core is in close physical contact with at least part of an outer surface of said core, while the outer surface of the cover is adapted for exposure to solar radiation by the presence thereon of a solar energy absorptive coating.

### DEFINITIONS

The term "heat transfer fluid" means a gas or liquid suitable for transferring heat from the solar collector(s) to where the heated fluid can be utilized.

The word "laminar" in the present context, as applied to the metallic cover, means that this is plate-like and may have a thickness of e.g. 0.25 to several millimeters.

The term "solar energy absorptive coating" means a coating which selectively or non-selectively absorbs electromagnetic energy from the sun.

The words "attachable" and "detachable" in the present context, as applied to the metallic cover, means that this is adapted to be attached to the core or detached from the core, respectively, either in one piece or in more than one piece.

### BRIEF DESCRIPTION OF THE DRAWINGS

Figure 1 shows a general view of an embodiment of the present invention.
Figure 2 shows in transverse section another embodiment of the present invention.

### DETAILED DESCRIPTION OF THE INVENTION

The apparatus of the invention is preferably further characterized by at least one of the following features:
(a) said at least one device comprises a plurality such devices, adapted for serial or parallel transport of said heat-transfer fluid;
(b) said absorptive coating has a thickness in the range of 100 nm to 5000 nm;
(c) the material of said metallic cover is selected from steel, cobalt and cobalt alloys (the steel may be e.g. stainless steel);
(d) said cover is attachable to and detachable from said core, and its attachability /detachability is achieved by magnetization /demagnetization of said cover and said core, and/or by click fastenings, and/or by tensioned clasps and/or tensioned springs, and/or by flange elements attached to said cover, having holes through which bolts may be inserted;
(e) said absorptive coating is a vacuum-, chemically- or electrochemically-deposited coating;
(f) said core has the form of a hollow cylinder.

It will be self-evident that the metallic cover, where consisting of one or more curved sections, will need to be sufficiently flexible for the "wrap around" purpose.

While it is presently preferred that the core has a superficially hollow cylindrical configuration, because such configuration should have less wind resistance and perhaps be more amenable to fitting the laminar cover in accordance with the present invention, other superficial configurations, such as an elliptical prism, a cube or a rectangular prism either of which may have rounded edges and corners, are not excluded. It will be evident, however,that the hollow core constitutes a heat-exchanger (alternatively termed "receiver") which absorbs the concentrated solar radiation and transfers the heat to the heat transfer fluid. The heat exchange element can be in any configuration known in the art for this purpose; merely by way of example, it may tale the form of thin walled tubing through which the heat transfer fluid circulates.

Whereas the (optionally flexible and/or detachable) metallic cover configured to wrap around and to be in close physical contact via a surface thereof, defined as an inner surface, with the outer surface of the core, such close physical contact is achieved, in one embodiment, by polishing to the order of micronic fineness, either the outer surface of the core or the inner surface of the cover, or both.

In another embodiment, the close physical contact is achieved by a layer of metal or metal alloy, disposed intermediately between the outer surface of the core and the inner surface of the cover. Desirably, the metal or metal alloy is solid at ambient temperature and is either sufficiently soft for efficient thermal contact, or is liquid under the conditions of absorption of solar energy; for example, the metal or metal alloy may be lead or lead alloy. It is further desirable that the conditions of absorption of solar energy (particularly the temperature at the solar energy absorptive surface) and the thickness of the intermediately disposed layer are such, that, when liquid, it is held in place by surface tension forces.

It will be evident that the solar energy-absorptive coating must have high absorptivity. It has preferably a thickness of 100 nm to 5000 nm and can be applied chemically or electrochemically, or by vacuum deposition methods, e.g. flash evaporation, or electron-beam evaporation. By way of example, the deposited high absorptivity coating may comprise a (black) mixture of aluminum and alumina which also exhibits low emissivity; it is presently expected that such a coating would withstand temperatures up to about 400°C. (For higher temperatures e.g. up to about 700-800°C, other absorptive coatings would be used.) This coating can have constant (non-variable along the surface) emittance (ε) and absorbance (α) values, or alternatively the values of ε and α can vary along the surface of the absorber plate in a regular manner. As is known in the art, an ideal selective surface has absorbance (α) = 1 and emittance (ε) = 0, however these values of α and ε cannot be attained, since usually the nature of the surfaces is that the higher the absorbance, the higher the emittance. This means, that in practice one has to sacrifice either high absorbance, or low emittance, when searching for a compromise solution.

It is not however essential that the solar energy-absorptive coating be vacuum deposited. A high-temperature resistant black paint, or treating the outer surface of the cover chemically or electrochemically, so as to impart a rugged black surface thereto, may also be suitable, for example.

In a particular embodiment of the invention, the periphery of the hollow core may be constituted by a plurality of hollow tubes welded together in a predetermined configuration. Presently particularly preferred is a cylindrical configuration, but other configurations, such as tubes with a rectangular or oval cross-section, would also be possible. When the periphery of the hollow core is constituted by such a plurality of hollow tubes, it would be convenient for each of these tubes to be adapted for flow of heat transfer fluid therethrough (c.f. US Patent No. 4,414,812 (Parry), the entire contents of which are incorporated by reference herein).

### DETAILED DESCRIPTION OF PRESENTLY PREFERRED EMBODIMENTS

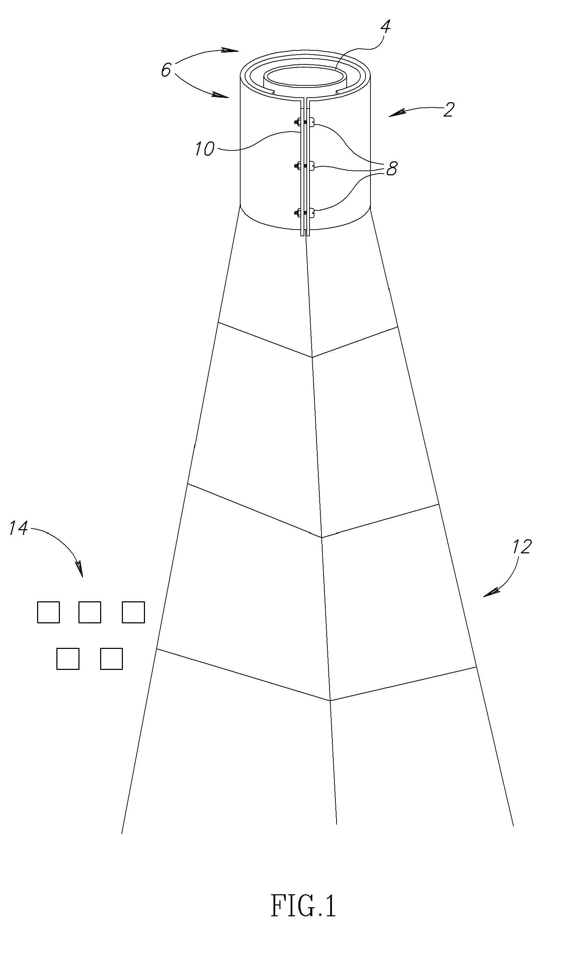

Figure 1 shows a general view of an embodiment of the present invention, in which a cylindrical solar energy collector 2 comprises a cylindrical core 4, enwrapped by a close-fitting detachable laminar metallic cover 6, the outer surface of which is adapted e.g. by deposition thereon of a black layer, to efficiently absorb solar energy. Merely by way of example, this layer may be a vacuum deposited layer, e.g. aluminum metal and alumina which are vacuum deposited in admixture. In this embodiment of Figure 1, it is desirable for purposes of greater efficiency that the outer cylindrical surface of 4 and/or the inner surface of 6 be highly polished, e.g. to micronic fineness. The ends of the wraparound cover 6 meet at 10, where they are fastened together e.g. magnetically, or by click-fasteners, or by any suitable arrangement of clasps, springs or bolts, and so forth. The illustration shows three such fastening devices 8, but of course a person of the art will be able to determine how many fastening devices will be needed in a particular case. The fastening devices 8, as indeed the solar collector device including both the core and the laminar cover, are all constructed from materials selected to withstand the rigorous heat and atmospheric conditions to which they will be subjected. The energy collector 2 is shown mounted on tower 12 and will receive solar radiation via a plurality of mirrors (e.g. tens or hundreds of heliostats) on the ground represented by reference numeral 14.
It will be appreciated that although Figure 1 depicts a single solar collector, there may alternatively by used a plurality of collectors. All collectors have ingress and egress devices (not shown), e.g. conduits, for heat transfer fluid. Where a plurality of collectors is utilized, the heat transfer fluid conduction devices may be arranged independently of each other, or they may be arranged in parallel or in series.

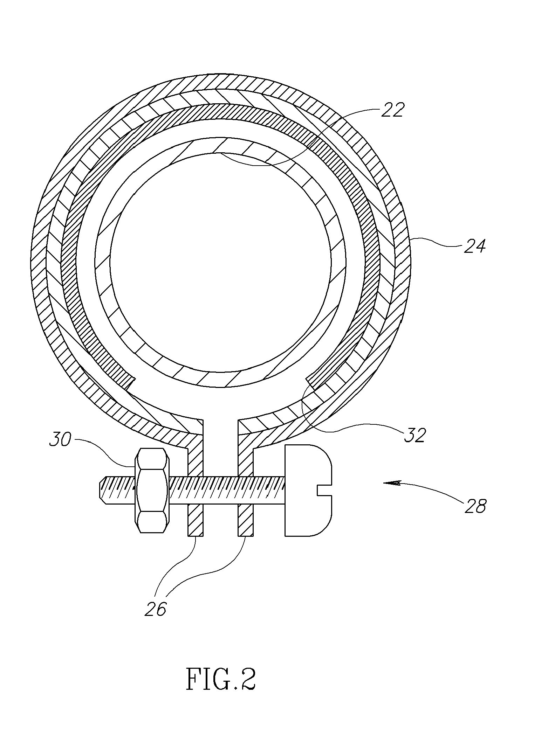

Figure 2 shows a transverse section through a cylindrical collector which is an embodiment of the invention similar to, yet not identical with, the embodiment of Figure 1. In Figure 2, core 22 is enwrapped by laminar cover 24 having a solar energy absorptive surface (e.g. as described for Figure 1), the ends of the cover being held together at attached flanges 26 by bolt 28 tightened by nut 30. In this embodiment, the desired close contact between the cover and the core is achieved principally by an intermediate conductive layer 32, which at the operative temperature of heat absorption will be either sufficiently soft for efficient thermal contact, or may be liquid, in which case it will be held in the thin annular cavity by surface tension. Suitable materials for conductive layer 32 are lead and lead alloys (for temperatures up to about 400°C), but of course this does not exclude use of other suitable metals or alloys, particularly for higher operating temperatures.

While the invention has been described with respect to a limited number of embodiments, it is evident that many alternatives, modifications and variations will be apparent to those skilled in the art. Accordingly, the invention is intended to embrace all such alternatives, modifications and variations that fall within the spirit and broad scope of the appended claims.

## Claims

1. Apparatus for collection of solar energy which includes at least one heat-transfer collector device comprising (i) a hollow core, adapted for passage of heat transfer fluid through the hollow(s) thereof, and (ii) a laminar metallic cover defining an inner and an outer surface, said cover being configured to wrap around said core whereby the inner surface of said core is in close physical contact with at least part of an outer surface of said core, while the outer surface of said cover is adapted for exposure to solar radiation by the presence thereon of a solar energy absorptive coating.

2. Apparatus according to claim 1, which is further **characterized by** at least one of the following features:
(a) said at least one device comprises a plurality such devices, adapted for serial or parallel transport of said heat-transfer fluid;
(b) said absorptive coating has a thickness in the range of 100 nm to 5000 nm;
(c) the material of said metallic cover is selected from steel, cobalt and cobalt alloys;
(d) said cover is attachable to and detachable from said core, and its attachability /detachability is achieved by magnetization /demagnetization of said cover and said core, and/or by click fastenings, and/or by tensioned clasps and/or tensioned springs, and/or by flange elements attached to said cover, having holes through which bolts may be inserted;
(e) said absorptive coating is a vacuum-, chemically- or electrochemically-deposited coating, or any combination thereof;
(f) said core has the form of a hollow cylinder.

3. Apparatus according to claim 2, wherein said close physical contact is achieved by polishing to the order of micronic fineness, either the outer surface of said core or the inner surface of said cover, or both.

4. Apparatus according to claim 2, wherein said close physical contact is achieved by the presence of a layer of metal or metal alloy, disposed intermediately between the outer surface of each said core and the inner surface of said cover.

5. Apparatus according to claim 4, wherein said metal or metal alloy is solid at ambient temperature and under the conditions of absorption of solar energy is either sufficiently soft for efficient thermal contact, or is liquid.

6. Apparatus according to claim 5, wherein the metal or metal alloy is lead or lead alloy.

7. Apparatus according to claim 6, wherein the conditions of absorption of solar energy and the thickness of said intermediately disposed layer are such, that said liquid is held in place by surface tension forces.

8. Apparatus according to claim 1, wherein at least one of said heat-transfer devices is mounted on a tower.

9. Apparatus according to claim 1, wherein the periphery of said core is constituted by a plurality of hollow tubes welded together in a predetermined configuration.

10. Apparatus according to claim 9, which is further **characterized by** at least one of the following features:
(a) said at least one device comprises a plurality such devices, adapted for serial or parallel transport of said heat-transfer fluid;
(b) said absorptive coating has a thickness in the range of 100 nm to 5000 nm;
(c) the material of said metallic cover is selected from steel, cobalt and cobalt alloys;
(d) said cover is attachable to and detachable from said core, and its attachability /detachability is achieved by magnetization /demagnetization of said cover and said core, and/or by click fastenings, and/or by tensioned clasps and/or tensioned springs, and/or by flange elements attached to said cover, having holes through which bolts may be inserted;
(e) said absorptive coating is a vacuum-, chemically- or electrochemically-deposited coating, or any combination thereof;
(f) said core has the form of a hollow cylinder;
(g) each of said hollow tubes is adapted for flow of heat transfer fluid therethrough.

11. Apparatus according to claim 10, wherein said close physical contact is achieved by polishing to the order of micronic fineness, either the outer surface of said core or the inner surface of said cover, or both.

12. Apparatus according to claim 10, wherein said close physical contact is achieved by the presence of a layer of metal or metal alloy, disposed intermediately between the outer surface of each said core and the inner surface of said cover.

13. Apparatus according to claim 12, wherein said metal or metal alloy is solid at ambient temperature and under the conditions of absorption of solar energy is either sufficiently soft for efficient thermal contact, or is liquid.

14. Apparatus according to claim 13, wherein the metal or metal alloy is lead or lead alloy.

15. Apparatus according to claim 14, wherein the conditions of absorption of solar energy and the thickness of said intermediately disposed layer are such, that said liquid is held in place by surface tension forces.

16. Apparatus according to claim 9, wherein at least one of said heat-transfer devices is mounted on a tower.

17. Apparatus according to claim 1, substantially as hereinbefore described, with particular reference to and as illustrated in the accompanying drawings.
